# EUROPEAN PATENT APPLICATION

(11) **EP 4 790 280 A1**
(43) Date of publication of application: **12.08.2026**
(21) Application number: 25156360.7
(22) Date of filing: 06.02.2025
(51) Int. Cl.: F16K 3/18, F16K 51/02

(54) **VACUUM TRANSFER VALVE**

(71) Applicant: UHV Design Limited, Laughton, East Sussex BN8 6BN (GB)
(72) Inventor: The designation of the inventor has not yet been filed
(74) Representative: Schlich

(57) **Abstract**

A valve, for a vacuum chamber, comprises a closure member (16), a seal (18), a seat (12) and an aperture (14), wherein
the closure member urges the seal onto the seat to seal the aperture, and
the valve is moveable to and from a first, gas barrier position in which the valve is closed and provides a gas barrier seal but not a vacuum seal.

## Description

### Introduction

The present invention relates to a transfer valve, in particular a transfer valve for a vacuum chamber and especially a valve located between chambers of a multi-chamber apparatus.

### Background to the Invention

Valves have common applications in vacuum chambers in a number of fields, including semiconductor manufacturing, pharmaceutical production and scientific research and development, where controlling the transfer of substrates between different chambers while maintaining high vacuum conditions and/or internal chamber gas atmospheres is critical.

Vacuum strength is indicated by the amount of matter remaining in a system with a high vacuum indicating very little matter or few particles present. Vacuum is primarily measured in terms of its absolute pressure, expressed in units such as Torr or kPa.

Vacuum strength is typically subdivided into ranges according to the amount of pressure present in a system. For example, atmospheric pressure is variable but is standardised at 760 Torr or 101.325 kPa, low vacuum, also referred to as rough vacuum, typically refers to a system with between 760 to 25 Torr or 101.325 to 3.333 kPa and high vacuum typically refers to a system with between 1 x 10⁻³ to 1×10⁻⁸ Torr or 1.333 x 10⁻⁴ to 1.333 x 10⁻⁹ kPa. High vacuum conditions are typically required for certain semiconductor manufacturing processes which are described in more detail below.

Vacuum transfer valves are known, and primarily function to control the flow of gases or isolate specific sections of multi-chamber vacuum chambers, particularly during processes that require contaminant-free environments. Vacuum transfer valves are most commonly employed in the production of products that are highly sensitive to contamination and thus require vacuum conditions to ensure their integrity and quality.

Among the widely used configurations in vacuum transfer valves are the L-valve and J-valve designs, which are well known in the prior art. These designs are characterised by the more or less L- or J-shaped movement of the valve closure member as it moves from a fully open position to a closed position and vice versa. This movement typically involves two phases: vertical motion to an intermediate position, followed by horizontal motion to the closed position. These motions are conventionally achieved through the use of two distinct valve drives, as described for example in US 9976655 B2 and US 5755255 A.

A persistent challenge in vacuum transfer valves arises from the generation of particulates during sealing operations. Particulate contamination often arises due to the mechanical interaction between components of the valve, particularly the valve closure member and the valve seal ring. Seals in vacuum transfer valves are typically formed from resilient material such as Kalrez^{®} or Viton^{®} and while these materials are resilient to degradation, vacuum seals are subject to wear and deformation under the significant forces required during normal operation to achieve a tight vacuum seal. Friction and compression during the sealing process can lead to the formation of particulates or frittered particles, which compromise and can degrade the quality of the vacuum, interfere with sensitive processes, and lead to defects in high-precision manufacturing applications, such as semiconductor wafer fabrication.

Particulate generation is particularly problematic in semiconductor wafer manufacturing, where processes demand high purity, contaminant-free environments. Modern semiconductor wafers employ intricate micro- and nano-scale circuitry, with conductive tracks often being separated by just a few nanometres. Particulates introduced during the manufacturing process can settle on the wafer surfaces, bridging conductive tracks in the micro- and nano-scale circuitry, thus resulting in defects, rendering the affected circuits non-functional or out of specification.

Particulate contamination in vacuum chambers can disrupt vacuum deposition processes, such as chemical vapour deposition (CVD) and physical vapor deposition (PVD), commonly used in semiconductor manufacturing, leading to defects in coatings or films applied to the wafers. Cleaning and restoring vacuum environments after particulate contamination is time-consuming and costly, further impacting manufacturing efficiency.

Various approaches have been employed to attempt to address this issue, including the use of alternative sealing materials and surface coatings designed to reduce wear on vacuum seals. However, these solutions often involve trade-offs, such as reduced durability of the sealing components, increased costs, or complexity in manufacturing.

One specific approach in the art that has been used to attempt to solve this issue is shown in US 5755255 A. Described therein is an alternative actuation mechanism designed to disengage a valve closure member from a seal located on the valve seat surface, positioned between the closure member and the seat, prior to initiating movement. However, this solution focuses exclusively on minimising friction between the valve closure member and the seal during movement but does not address the problem of excessive particulate generation caused by the complete compression of the vacuum seal during the sealing process.

Given the limitations of current solutions, there is a clear need for an alternative or improved vacuum transfer valve that reduces particulate generation during operation.

An aim of the present invention is an alternative, preferably improved, valve that addresses and preferably ameliorates one or more problems identified in the art.

### Summary of Invention

Accordingly, the present invention provides a valve, typically a gate valve or a transfer valve, designed to be used under high-vacuum conditions e.g. to regulate gas flow or isolate specific sections of multi-chamber vacuum chambers.

For this purpose, the invention provides a valve that is moveable to and from a first gas barrier position in which the valve is closed and provides a gas barrier seal but not a full vacuum seal.

Advantageously, in the gas barrier position an adequate sealing can be achieved between two chambers at similar pressures, for example when both contain gas, i.e. neither is substantially evacuated, without moving the valve to a fully closed position that risks generating higher levels of particulates.

Also provided is a vacuum chamber comprising the valve and a method of separating gas atmospheres in adjacent chambers, comprising providing adjacent chambers having respective gas atmospheres, wherein the chambers communicate with each other via the valve.

### Details of the Invention

Hence, as set out above, a valve is provided that is moveable to and from a first, gas barrier position in which the valve is closed and provides a gas barrier seal but not a full vacuum seal.

In the context of this invention, a gas barrier seal refers to closure of a valve that resists the flow of gas between two adjacent chambers without necessarily achieving a full vacuum seal. A gas barrier seal is not intended to adequately seal an evacuated vacuum chamber from an adjacent space or chamber that is at atmospheric pressure.

The gas barrier position is usefully employed when the pressure difference between the two chambers is minimal, such as when the chambers have similar pressures. In the gas barrier position, the valve is typically capable of tolerating a certain maximum pressure difference, for example up to 0.5 bar or 50 kPa, preferably up to 0.4 bar or 40 kPa and most preferably up to 0.3 bar or 30 kPa.

The first, gas barrier position for the valve may be used for example between two chambers that are evacuated. This may occur prior to the start of a process, where all chambers are pumped down to a reduced base pressure to eliminate the presence of unwanted gases. In such cases, a gas barrier seal is sufficient to maintain the reduced base pressure between the two chambers, provided the pressures in both chambers remain similar.

Alternatively, the first, gas barrier position may be employed between two chambers where one is evacuated and the other is at a reduced pressure as long as, in the same way as described elsewhere, the chambers are at similar pressure, typically wherein the pressure difference between the chambers does not exceed 0.5 bar, preferably does not exceed 0.4 bar, and most preferably does not exceed 0.3 bar. This scenario might arise when one chamber is evacuated to allow for a change in process materials as part of a specific process regime, while reduced pressure conditions are preserved in the other chamber.

Preferably, the valve is additionally moveable to and from a second, full vacuum position in which the valve is closed and provides a full vacuum seal. In the second, full vacuum position the valve is closed with a greater force than when the valve is closed and in the first, gas barrier position. A full vacuum seal is able to withstand a higher pressure difference between chambers than a gas barrier seal.

Preferably, the valve is additionally moveable to and from a third, open position. In this third, open position the closure member is typically fully or at least partially withdrawn from the valve aperture.

Typically, the valve comprises an actuator to actuate (i.e. open and close) the valve, in particular to move the valve to and from the first, gas barrier position. Suitably, the actuator exerts sufficient force to actuate the valve and specifically move the valve to and from and between its various positions.

The amount of force required to move the valve into the first, gas barrier position and create a gas barrier seal between two chambers may be between 200 and 1000 N, more typically between 400 and 800 N and even more typically between 500 and 700 N. In an example below a force of about 600N was used for the first, gas barrier position, to create a gas barrier seal. The force required to move the valve into the first, gas barrier position is supplied by the actuator and is reduced compared with the force needed to fully close the valve.

The amount of force required to move the valve into the second, full vacuum position and create a full vacuum seal, e.g. between two chambers, may be between 1500 and 3000 N, more typically between 2000 and 2500 N and even more typically between 2100 and 2300 N. In an example below a force of about 2200 N was used for the full vacuum position, to create a full vacuum seal. A greater force is needed than when closing the valve to the gas barrier position.

The actuator supplied with the valve may be capable of providing forces up to 4000 N, more preferably up to 3500 N, typically up to 3000 N to actuate the valve, providing a margin of error for achieving the fully closed position and allowing the valve over time to deal with changes in force needed according to e.g. valve wear, seal wear, temperature, etc.

Suitable actuators provide force at many different levels, sufficient to close the valve to the first, gas barrier position and to the distinct second, fully closed position. As will be appreciated at least three levels of force are required to move the valve to and from the open, gas barrier and fully closed positions. In some embodiments, the actuator is capable of providing at least 4 levels of force. Actuators capable of providing a substantially continuously variable force are also suitable; such actuators are capable of providing continually adjustable force, up to a maximum force value, to open or close the valve and move it between its various positions and are also capable of moving the valve into two or more gas barrier positions, using different levels of force but still not being in a fully closed position.

Preferably, the valve comprises an actuator to actuate (i.e. open and close) the valve, wherein the actuator comprises an electric linear actuator (also referred to herein as a smart linear motor). As before, the smart linear motor is capable of providing a continuously variable force to actuate the valve. The amount of force exerted by the smart linear motor may be continuously varied, for example by varying the amount of power supplied to the smart linear motor.

As is conventional in this field, typical valves comprise a closure member, a seal, a seat and an aperture, wherein the closure member urges the seal onto the seat to seal the aperture. Typically, the seal is positioned on and fixed to the closure member and brought into contact with the seat as the closure member presses the seal against it to close the aperture. In alternative embodiments, the seal may be positioned on and fixed to the seat.

Also typically, the closure member moves to and from a first, gas barrier position via an L- or J-shaped motion. Operation of the valve generally involves moving the closure member sequentially in two directions: a first movement, followed by a second, and vice versa. These movements are typically vertical and lateral, respectively. In practice, the closure member moves vertically before moving laterally during opening and follows the reverse sequence for closing.

The valve closure member may comprise a substantially flat front surface, on which is mounted a seal. The closure member may be rectangular, square or circular (e.g. a disk) in form, more commonly rectangular with rounded corners. In preferred embodiments of the invention, the aperture to be sealed by the closure member has a cross-sectional areas of 100 cm² to 400 cm², preferably 200 cm² to 300 cm². In the example below the closure member has a cross-sectional area of 210 cm².

The seal is preferably formed from a resilient material such as Kalrez^{®}, Viton^{®}, or other perfluoroelastomer or fluoroelastomer that is suitable for use under high-vacuum and temperature conditions.

In more detail, in the first gas barrier position the seal is generally only partially compressed upon contact with the seat, urged onto the seat with moderate force, enough force to form a seal but not a fully closed seal. The amount of force exerted on the seal by the actuator, through the closure member, determines the degree of compression and the compressive forces experienced by the seal. In other words, the grater the force applied, the more forcibly the seal is pushed into the seat, resulting in a higher degree of compression. A moderate force is used for a gas barrier seal, and a higher level of force is required for fully closing the valve.

Suitably, the valve of the invention can adopt multiple different closed positions in which the seal is compressed against the seat, each characterised by varying levels of compression of the seal against the seat. The force exerted on the seal, typically by the actuator, in these closed positions may be varied, leading to differing degrees of compression according to the position of the valve. As a result there may be a plurality of gas barrier positions, wherein the valve is sufficiently tightly closed to effect a gas seal between chambers at different pressures, though again not closed completely and not providing a seal between an evacuated chamber and atmospheric pressure. Embodiments of the invention provide two such gas barrier positions, or three or more gas barrier positions.

In further embodiments of the invention having a closure member that urges the seal onto the seat to seal the aperture, the amount of force urging or exerted on the seal by the closure member to seal the aperture may be continuously varied. This may be achieved using an actuator, in particular an actuator comprising a smart linear motor, by continuously varying the amount of power suppled the actuator. For example, to reduce the amount of force exerted on the seal, thereby reducing its compression, the amount of power supplied to the actuator, in particular the smart linear motor would be reduced.

Consequently, in certain embodiments of the invention, the valve comprises a closure member, a seal, a seat and an aperture, wherein the closure member is urged by an actuator, preferably a smart linear motor, onto the seat to seal the aperture.

In certain embodiments of the invention, the actuator may alternatively comprise a ballscrew driven by a servo motor with force feedback, which may similarly provide a continuously variable force output for valve operation.

Action of the actuator on the closure member may be similar to that in the known art in this field. Alternatively, the actuator may exert force onto the closure member via a live hinge carrier and two independent levers, wherein in response to initial linear movement of the actuator the live hinge carrier communicates motion in one direction, e.g. vertical (i.e. upwards or downwards) motion, from the actuator to the closure member; and in response to subsequent linear movement of the actuator in the same direction, the two independent levers communicate lateral (i.e. towards and away from the seat) motion from the actuator to the closure member. Hence, the live hinge carrier and two independent levers in certain embodiments of the invention allow a single motor to be used to effect movement of the closure member in two directions.

In the second, fully closed vacuum position the seal is generally fully compressed or at least more than partially compressed upon contact with the seat, forming the full vacuum seal. The seal is resilient and force is needed to compress it between respective closed positions, increased force resulting in further compression. Typically, the difference in 'lateral position' of the closure member between the first, gas barrier position and second, full vacuum position is between 0.25 mm and 3 mm, more typically between 0.5 mm and 2.5 mm, even more typically between 1 and 2 mm. In an example below the difference in 'lateral position' of the closure member between the first, gas barrier position and second, full vacuum position is approximately 1.5 mm.

In other words, in the second, full vacuum position, the seal is typically between 0.25 mm and 3 mm, more typically between 0.5 mm and 2.5 mm, and even more typically between 1 and 2 mm more compressed than in the first, gas barrier position.

A full vacuum seal substantially impedes gas flow across a pressure differential of 1 atmosphere, e.g. fully isolating one chamber from another chamber at atmospheric pressure, whereas a gas barrier seal generally creates a barrier between two chambers, capable of withstanding lower pressure differentials. The gas barrier seal is suitable for situations where the pressure difference between the two chambers is reduced, and may be minimal, but the gas barrier seal still provides isolation between two chambers much like the full vacuum seal. However, unlike a full vacuum seal, the gas barrier seal does not require the seal to be fully compressed, which offers the advantage of reducing the likelihood or risk of particulate generation from the seal.

The full vacuum position is typically used when the pressure difference between two chambers is significant. For example, when one chamber is vented for maintenance or change of process materials, while a second adjacent chamber is still under vacuum and the pressure difference between two chambers is greater than 0.5 bar.

When the pressure difference between two chambers exceeds 0.3 bar or 30 kPa, for instance, 0.4 bar or 40 kPa or more specifically 0.5 bar or 50 kPa, the valve is typically shifted to the full vacuum position to protect the vacuum conditions of chambers communicating with each other via the valve and prevent potential damage to the valve.

The skilled person will appreciate that different chambers with different conditions, dimensions and/or constructed from different materials may necessitate different forces to move the valve into its various positions. However, the fundamental principle remains the same, that in the second, full vacuum position, the valve is more tightly closed (i.e. the seal is further compressed) than in the first, gas barrier position. In other words, in the second, full vacuum position, the valve is closed with more force in the second, full vacuum position than in the first, gas barrier position. Consequently, less force is generally required to move the valve into the first, gas barrier position than into the second, full vacuum position, even though the exact force values may vary depending on specific circumstances.

In operating the valve, for example during certain semiconductor manufacturing processes, a full vacuum seal is not always necessary and suitable vacuum or atmospheric conditions can be maintained using a gas barrier seal. In these situations, two chambers may have the same or similar pressures, making a gas barrier seal sufficient to control the atmosphere or maintain vacuum conditions within the one or more chambers. The valve of the invention can be positioned in the gas barrier position, applying enough or even just enough force to the closure member to urge it onto the seal, thus creating a gas barrier seal that prevents significant gas backflow or contamination between the chambers, without significant risk of generating particulates which could interfere with the processes.

By applying only the necessary force and avoiding excessive compressive and frictional stresses on certain valve components, including the seal, seat, and closure member, wear on these components can be reduced. This not only reduces particulate generation from closing of the valve but also extends the operational lifespan of the valve. This functionality also prevents unnecessary full vacuum sealing of the valve under certain conditions and in specific situations, thus limiting particulate production.

Furthermore, generally the valve is additionally moveable to and from a fourth, intermediate open position. In this fourth, intermediate open position, the closure member is typically positioned adjacent the seat in a 'ready to shut' position. In this intermediate open position, the seal does not contact the seat of the valve. In an example below the separation between the seal and the seat in the intermediate position is about 1 mm.

**In** further embodiments of the invention, the valve may comprise a lock mechanism to hold the valve in the gas barrier position and/or in a position that is not the gas barrier position.

Preferably, the lock mechanism is capable of holding the valve in that position in the absence of power supplied to the valve. **In** other words, the valve can be held securely in the gas barrier position or any other selected position without requiring a continuous power supply to the actuator of the valve.

**In** further embodiments of the invention, the valve comprises an electric linear actuator to move the valve and wherein the lock mechanism is capable of holding the valve in that position in the absence of power supplied to the electric linear actuator.

In operating the lock mechanism, power may be supplied to the electric linear actuator to move the valve to and from the first, gas barrier position. Once in the first, gas barrier position, the lock mechanism may be engaged to maintain the valve, and more specifically the closure member, in that position. Power may be disconnected from the electric linear actuator while still maintaining the valve in the same position. An advantage of this is that the valve of the invention can remain in the same position for extended periods without significant power usage, thus conserving energy and reducing power consumption.

Typically, the lock mechanism can further hold the valve in the second, full vacuum position in the absence of power supplied to the valve.

In one embodiment of the invention, the lock mechanism comprises a rotary solenoid that fixes the valve in its respective position without requiring constant power supply. This confers an advantage over pneumatic lock systems, which are commonly employed in the prior art, which require a constant flow of air and continuous power supply to maintain a valve in a specific position.

Typically, the lock mechanism comprises a physical locking mechanism having a rotary solenoid which can selectively engage a set of teeth on a brake with a set of complimentary teeth on an opposing rack, locking the valve in the gas barrier position and/or in a position that is not the gas barrier position. The rotary solenoid typically imparts linear motion to the brake by rotating, causing the brake to move towards or away from the rack, depending on whether the lock mechanism is opening or closing

The row of teeth on the brake and rack in the lock mechanism are suitably spaced between 2 and 4 mm apart, more typically between 2.5 and 3.5 mm apart and most typically between 2 and 3 mm apart. In an example below the teeth are spaced approximately 2.5 mm apart. Each tooth on the brake and rack typically has a height of between 0.25 - 0.75 mm and more typically between 0.4 - 0.6 mm. In an example below the teeth have a height of approximately 0.5 mm.

The brake and rack, which house the sets of teeth, may be positioned parallel to and in close proximity to one another. This arrangement enables the rotary solenoid to exert force on the brake, linearly urging it into contact with the rack. When this force is applied, the teeth of the brake and rack interlock securely, thereby locking the valve in place. The tooth spacing and height provides a secure locking action and fine control over the position in which the valve can be fixed.

Preferably, the lock mechanism comprises a brake directly coupled to the rotary solenoid while a rack is directly coupled to the closure member. Hence, when the rotary solenoid is actuated, the teeth on the brake engage with teeth on the rack, locking the valve and more specifically the closure member in its respective position.

The physical locking of the lock mechanism means that once the teeth of the lock mechanism engage, the valve is firmly fixed in place through the mechanical contact of the teeth, eliminating the need for power to maintain its position.

In certain specific embodiments of the invention, the valve comprises a closure member, a seal, a seat, an aperture and a lock mechanism, wherein the closure member is urged by an actuator, preferably an electric linear motor actuator, onto the seat to seal the aperture, and wherein the lock mechanism holds the valve in the gas barrier position and/or in a position that is not the gas barrier position.

Also provided by the invention is a chamber, suitably a vacuum chamber, comprising a valve of the invention as described herein. Vacuum chambers comprising a valve form particular embodiments of the invention for use especially in semiconductor wafer manufacturing. In a vacuum chamber, the valve typically forms part of one or more of the chamber walls, controlling input and output into and out of the chamber. The valve may also be positioned to connect two adjacent chambers, creating a multi-chamber system. This setup enables precise control of the conditions and atmospheres across various chambers, which is essential for processes such as semiconductor manufacturing.

Also provided by the invention is a method of separating gas atmospheres in adjacent chambers, comprising providing adjacent chambers having respective gas atmospheres, wherein the chambers communicate with each other via a valve of the invention as described herein. In other words, flow of gas between the respective chambers is regulated by the valve. Closing the valve prevents the communication between chambers.

Typically, the method comprises moving a valve described herein, preferably to and from the first gas barrier position, or alternatively to and from the second, full vacuum position in order to separate adjacent chambers having respective gas atmospheres, which chambers communicate with each other via a valve described herein.

In certain embodiments, the method may comprise separating vacuum conditions in adjacent evacuated chambers, comprising providing adjacent chambers having evacuated conditions, which chambers communicate with each other via a valve described herein.

### Advantages

The capacity for the actuator to exert continuously variable force allows the actuator to provide the valve with fine control over its positioning and exert an appropriate amount of force depending on the system conditions to entertain and maintain the valve in its respective positions.

In the gas barrier position, the closure member applies less force to the seal than would be required for a full vacuum seal, thus reducing wear on valve components such as the closure member, seal and seat, while preserving the integrity of the conditions in the chamber.

By applying lower force in the gas barrier position, the risk of material degradation and particulate generation from wear is minimised. The valve allows users to adjust the force exerted on the closure member, providing functionality to reduce wear and particulate production by applying only the appropriate force according to the specific conditions in the chambers.

One benefit of this adjustable force capability is particularly evident in scenarios where a complete vacuum seal (i.e. total isolation) is unnecessary. In such cases, where a gas barrier seal is sufficient to regulate gas flow and maintain the desired atmosphere, reduced force can be applied to the seal, minimising particulate generation. Conversely, when a complete vacuum seal is necessary - for instance, during venting or changing of the process materials when the pressure difference between adjacent chambers is greater than 0.5 bar - the valve can be fully vacuum sealed. The functionality introduced by the invention prevents unnecessary full vacuum closure of the valve, thereby reducing the frequency with which the full force needed for full vacuum sealing is applied to the seal.

The degree of wear and degradation on the seal (and thus particulate generation) is proportional to the amount of compressive force applied. In the first gas barrier position, the compressive force is deliberately limited, which reduces mechanical stress on the seal and minimises particulate generation caused by compression. Similarly, friction forces acting between the seal and the seat also contribute to particulate generation. By only partially compressing the seal in the first gas barrier position, the friction forces exerted onto the seat is reduced, thereby lowering the degradative friction forces experienced by the seat and further minimising particulate formation.

In other words, partial compression of the seal in the first gas barrier position helps to limit both compressive and frictional forces acting on the seal and seat. This approach significantly reduces particulate generation compared to if the valve were to always be positioned in the second, full vacuum position during closing, where the seal is fully compressed and subjected to higher mechanical stress.

### Example

The invention is now discussed in more detail with reference to the accompanying drawings in which:
Fig. 1 shows a schematic side view of a valve of the invention in an open position;
Fig. 2 shows a schematic side view of the valve of Fig. 1 in an intermediate position;
Fig. 3 shows a schematic side view of the valves of Fig. 1 and Fig. 2 in a gas barrier position;
Fig. 4 shows a schematic side view of the valves of Fig. 1, Fig. 2 and Fig. 3 in a fully closed position;
Fig. 5 shows an isometric view of a valve of the invention in an open position;
Fig. 6 shows a schematic front view of the bottom portion of the valve of Fig. 5;
Fig. 7 shows an schematic partial cross section view of a lock mechanism of the invention in an open position; and
Fig. 8 shows a schematic partial cross section view of the lock mechanism of

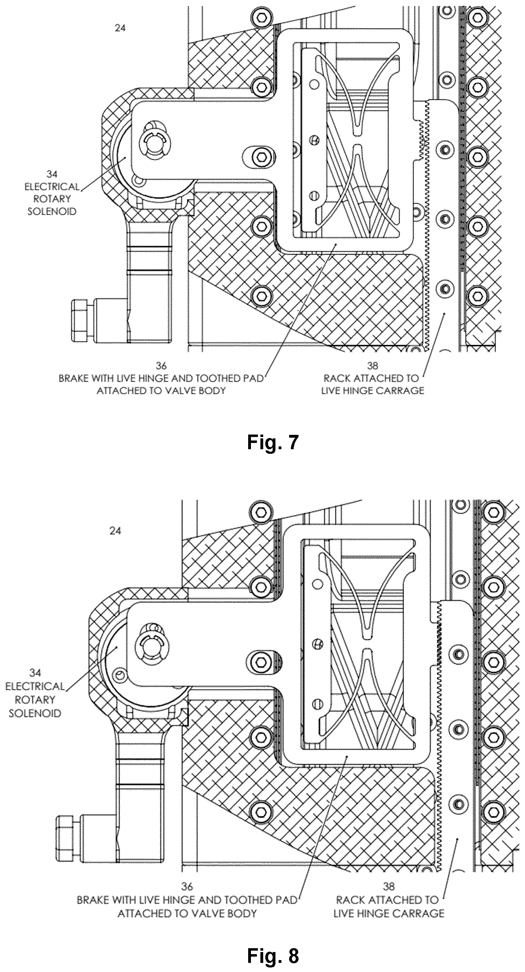

Fig. 7 in a closed position.

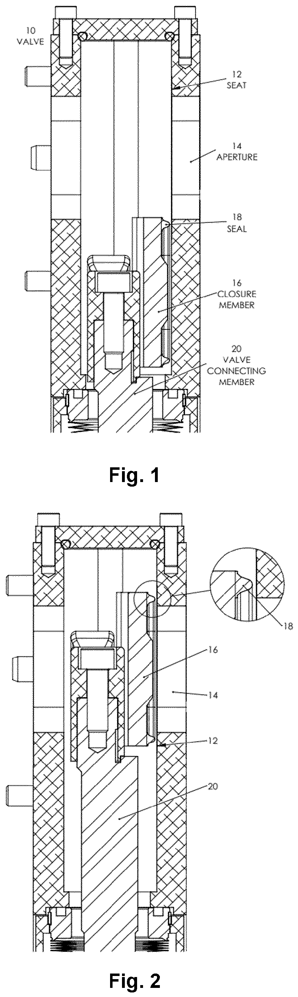

Referring to the figures, an exemplary embodiment of the invention is shown in Fig. 1. In this exemplary embodiment, a valve shown generally as 10 has a seat 12 and an aperture 14, through which gases, substrates and other substances can pass. A closure member 16, shown in Fig. 1 as being in an open position and fully withdrawn from the aperture, is housed within a valve housing and connected to the lower portion of the valve via a valve connecting member 20.

Fig. 2 shows valve 10 in an intermediate position, wherein the valve is 'ready to close'. In this position the closure member 16 has been moved vertically upwards compared to the open position shown in Fig. 1. The closure member now sits adjacent to but the seal 18 on its outer surface does not contact the seat 12. The closure member is arranged overlapping the aperture but does not close the valve due to the separation between the seal 18 and seat 12. As can be seen in the magnified view of the seal and seat shown in the top right corner of Fig. 2, the seal remains uncompressed and spaced from the seat. In this exemplary embodiment, the seal edge is positioned approximately 1 mm from the seat.

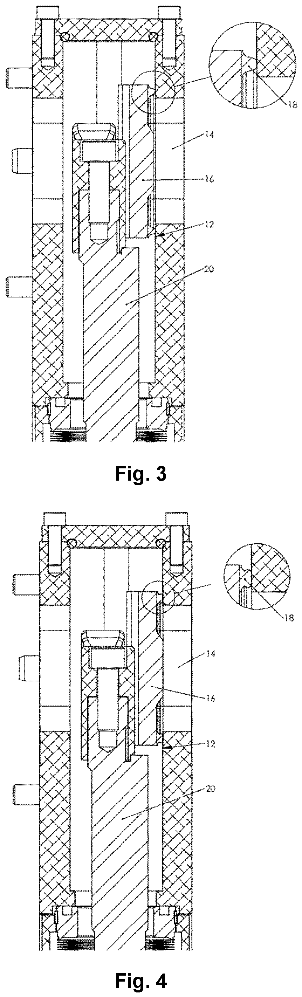

Fig, 3 shows valve 10 in a gas barrier position, wherein the valve is closed and the seal 18 is in contact but is only partially compressed against the seat 12 by the closure member 16. In this position, the closure member has been moved laterally (i.e. towards the seat) compared to the intermediate position shown in Fig. 2. As can be seen in the magnified view of the seal and seat shown in the top right corner of Fig. 3, the closure member is partially compressed against the seat by the closure member, forming a gas barrier seal.

Fig. 4 shows valve 10 in a full vacuum position, wherein the valve is fully closed and the seal 18 is in contact and is now more or less fully compressed against the seat 12 by the closure member 16. In this position, the closure member has been further moved laterally (i.e. towards the seat) compared to the gas barrier position shown in Fig. 3 and intermediate position shown in Fig. 2. As can be seen in the magnified view of the seal and seat shown in the top right corner of Fig. 4, the seal is fully compressed against the seat by the closure member, forming a full vacuum seal. In this exemplary embodiment, the difference in lateral position between the gas barrier position shown in Fig. 3 and full vacuum position shown in Fig. 4 is approximately 1 mm: the seal is thus compressed by approximately a further 1 mm in the full vacuum position shown in Fig. 4 compared to the gas barrier position shown in Fig. 3.

Hence, the valve of the invention has at least two closed positions, including one or more gas barrier positions and one full vacuum position. The amount of force required to move the valve from the intermediate position shown in Fig. 2 to the gas barrier position shown in Fig. 3 and instigate partial compression of the seal was approximately 600 N. The amount of force required to further move the valve from the gas barrier position shown in Fig. 3 to the full vacuum position shown in Fig. 4 and instigate full compression of the seal was approximately 2200 N.

It should be appreciated that different chambers with different conditions will require different forces to move the valve of the invention between the open, intermediate, first gas barrier and second, full vacuum positions. Depending on the conditions of the system, the absolute position of the closure member and seal may vary depending on the extent of seal compression required to produce a gas barrier seal or full vacuum seal. A lower force will always be required to move the valve into the gas barrier position compared to the full vacuum position.

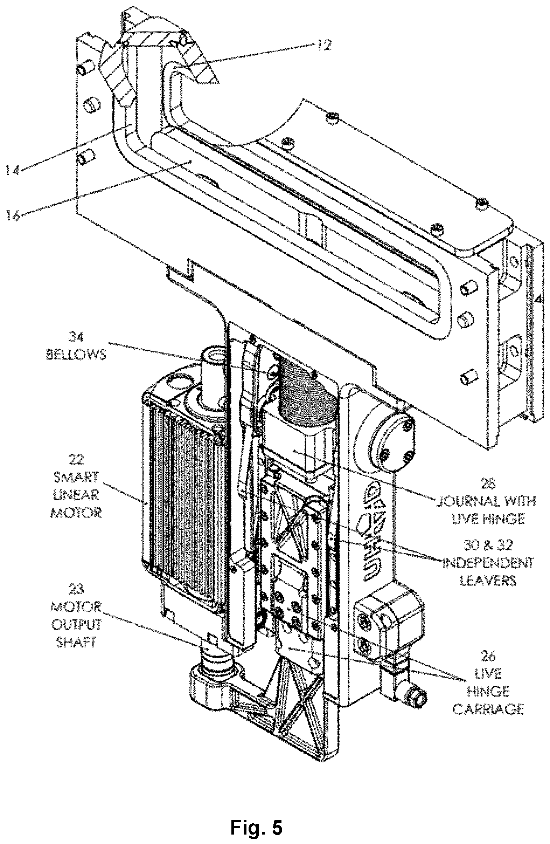

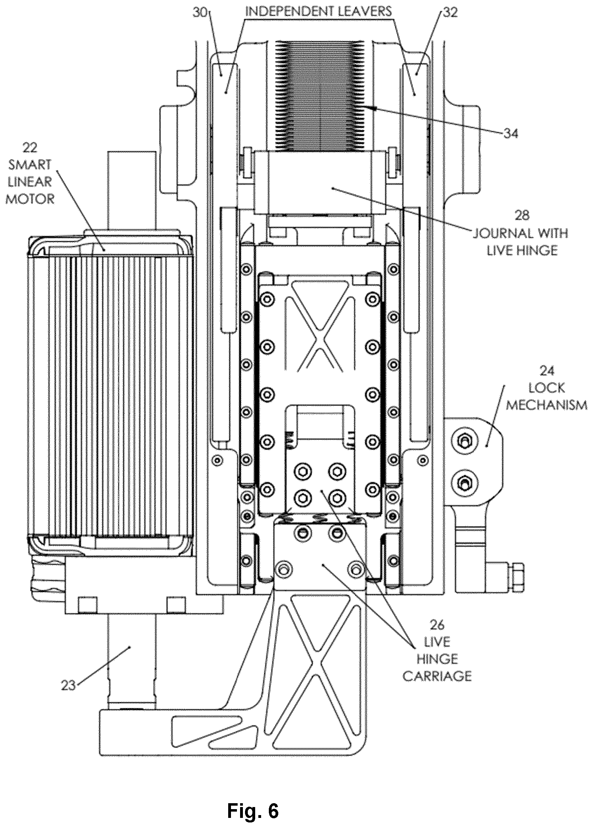

Fig. 5 shows an overall isometric view of the valve 10 shown previously in Figs. 1 - 4. Fig. 5 shows an alternative view of the valve seat 12, aperture 14 and closure member 16, seen previously in Figs. 1 - 4. The seal is positioned on the alternative side of the closure member and thus is obstructed from view in Fig. 5. Figs. 5 and 6 additionally shows the bottom portion of the valve which houses a smart linear motor 22, lock mechanism 24, live hinge carriage 26, journal with live hinge 28, independent levers 30 and 32 and bellows 34.

In operation, the smart linear motor 22 is powered and applies an initial force to move the closure member 16 from its open position to the intermediate position, in which it is moved closer to the seat 12 and is positioned 'ready to close' but the valve is still open. A live hinge carriage 26 attached to the motor output shaft 23 moves substantially linearly to effect this initial movement. The live hinge carriage is connected to the closure member via a journal with live hinge 28, bellows 34 and valve connecting member 20 (not shown in Fig. 5). Next, with further power, further linear movement of the motor output shaft acts through independent levers 30 and 32 placed either side of the closure member and via the live hinge carriage to further move the closure member, this time to move it laterally towards the seat. There is initial contact of the seal as it is partially compressed onto the seat to close the valve, and the valve is moved into the gas barrier position. Finally, with yet further power, yet further linear movement of the motor output shaft acts through the independent levers to further move the closure member laterally towards the seat. The seal is further compressed to full compression to move the valve into the fully closed, vacuum position.

Linear movement and force generated by the smart linear motor is continuously variable and can fluidly adjust the amount of force applied and the movement imparted to the closure member. The transition of the closure member from the intermediate position to the full vacuum position can occur through one or multiple small, continuous movements. Notably, the valve does not need to pause at or be held at the gas barrier position to reach the full vacuum position.

Fig. 6 shows an enlarged front view of the bottom portion of valve 10 shown in Fig. 5. This view more clearly shows the relationship between the smart linear motor 22 and the live hinge carriage 26. In operation the smart linear motor, when powered, linearly moves the motor output shaft vertically upwards or downwards depending on the direction of the motor drive. The motor output shaft induces vertical motion in the live hinge carriage and onwards connected components. The lock mechanism 24 has the ability to prevent movement of the live hinge carriage, thus maintaining the valve in its respective position. Details of the lock mechanism are described in the exemplary embodiment described below.

Fig. 7 and 8 show an enlarged front view of the lock mechanism 24 of valve 10 previously shown in Figs 5 and 6, in open and closed positions respectively. The lock mechanism has an electrical rotary solenoid 34, a brake with live hinge and toothed pad 36 and a rack attached to the live hinge carriage 38.

In operation, the rotary solenoid is powered and applies an initial force to move the brake from its open position, shown in Fig. 7, to its closed position, shown in Fig. 8. In the closed position, the brake moves closer to the rack attached to the live hinge carriage. The brake, which features a tooth pad with a row of teeth spaced approximately 2 mm apart and each tooth having a height of about 0.5 mm, is connected to the rotary solenoid. The rotary solenoid rotates clockwise or anticlockwise to impart substantially linear motion to the brake, moving it towards or away from the rack, respectively. When engaged, the teeth on the brake engage and interlock with complementary teeth on the rack.

The rotary solenoid operates by rotating and converts rotational motion into linear movement of the brake, allowing the brake to engage or disengage with the rack, thereby shifting the lock mechanism into a closed or open position. Since the rack is attached to the live hinge carriage, engaging the brake with the rack prevents movement of the live hinge carriage and, consequently, preventing movement of the closure member and maintaining the valve in its respective position. The valve can be maintained in this position irrespective of whether power is being supplied to the smart linear motor 22. The interlocking teeth on the brake and rack ensure that the position of the live hinge carriage and the closure member remains fixed, thereby maintaining the valve's respective position without requiring a continuous power supply to the smart linear motor.

## Claims

1. A valve, for a vacuum chamber, wherein the valve is moveable to and from a first, gas barrier position in which the valve is closed and provides a gas barrier seal but not a vacuum seal.

2. A valve according to claim 1, wherein the valve comprises a closure member, a seal, a seat and an aperture, wherein the closure member urges the seal onto the seat to seal the aperture.

3. A valve according to claim 1 or 2, wherein the valve is additionally moveable to and from a second, full vacuum position in which the valve is closed and provides a full vacuum seal.

4. A valve according to claim 3, wherein in the second, full vacuum position the valve is closed with a greater force than when the valve is closed and in the first, gas barrier position.

5. A valve according to any preceding claim, wherein the valve is additionally moveable to and from a third, open position.

6. A valve according to any preceding claim, comprising an actuator to move the valve between its respective positions, wherein the actuator is capable of providing a continuously variable force to actuate the valve.

7. A valve according to any preceding claim, comprising an actuator to move the valve between its respective positions, wherein the actuator comprises an electric linear actuator.

8. A valve according to any preceding claim, comprising a seal that is partially compressed when the valve is in the first, gas barrier position.

9. A valve according to any preceding claim, comprising a seal that is fully compressed or at least more than partially compressed when the valve is in the second, full vacuum position.

10. A valve according to any preceding claim, comprising a lock mechanism to hold the valve in the gas barrier position and/or in a position that is not the gas barrier position.

11. A valve according to claim 10, wherein the lock mechanism is capable of holding the valve in the gas barrier position and/or in a position that is not the gas barrier position in the absence of power supplied to the valve.

12. A valve according to claim 11, comprising an electric linear actuator to move the valve between its respective positions and wherein the lock mechanism is capable of holding the valve in the gas barrier position and/or in a position that is not the gas barrier position in the absence of power supplied to the electric linear actuator.

13. A valve according to any of claims 10 to 12, wherein the lock mechanism can further hold the valve in the second, full vacuum position in the absence of power supplied to the valve.

14. A vacuum chamber comprising a valve according to any of claims 1 to 13.

15. A method of separating gas atmospheres in adjacent chambers, comprising providing adjacent chambers having respective gas atmospheres, which chambers communicate with each other via a valve according to any of claims 1 to 13.
